# EUROPÄISCHE PATENTANMELDUNG

(11) **EP 1 905 567 A1**
(43) Veröffentlichungstag der Anmeldung: **02.04.2008**
(21) Anmeldenummer: 07117283.7
(22) Anmeldetag: 26.09.2007
(51) Int. Cl.: B29C 45/44, F16K 27/04, F16K 11/07

(54) **Vorrichtung und Verfahren zur Herstellung eines Kunststoffgehäuses für ein pneumatisches Schieberventil**

(30) Priorität: 26.09.2006 DE 102006045377
(71) Anmelder: Bosch Rexroth AG, 71701 Schwieberdingen (DE)
(72) Erfinder: Bergmann, Klaus, 70499, Stuttgart (DE); Sulzberger, Klaus-Dieter, 71701, Schwieberdingen (DE); Kulmann, Erwin, 71706, Markgröningen (DE)
(74) Vertreter: Kietzmann, Lutz

(57) **Zusammenfassung**

Vorrichtung zur Herstellung eines Kunststoffgehäuses (5) für ein pneumatisches Schieberventil aus Kunststoff durch Spritzgießen, mit einer mit mindestens einem Werkzeugkern (2) zur Bildung einer Schieberbohrung (4) ausgestatteten Gießform (1), wobei dass ein mehrere Hinterschnitte (3a, 3b) zur Ausbildung einer abgestuften Schieberbohrung (4) aufweisender Werkzeugkern (2) in der Gießform (1) positioniert ist, welcher nach dem Einspritzen des flüssigen Kunststoffs und vor dem Abkühlen desselben aus der Gießform (1) zwangsentformend herausziehbar ist, so dass sich nach elastischer Verformung des den Werkzeugkern (2) umgebenden Bereichs des Kunststoffgehäuses (5) eine nachbearbeitungsfreie abgestufte Schieberbohrung (4) herausbildet.

## Beschreibung

Die vorliegende Erfindung betrifft eine Vorrichtung sowie ein Verfahren zur Herstellung eines Kunststoffgehäuses für ein pneumatisches Schieberventil durch Spritzgießen in einer mit mindestens einem Werkzeugkern zur Bildung einer Schieberbohrung ausgestatteten Gießform. Weiterhin bezieht sich die Erfindung auf ein Verfahren unter Verwendung dieser Vorrichtung.

Das Einsatzgebiet der vorliegenden Erfindung erstreckt sich auf die Herstellung von Mehrwegeventilgehäusen nach Schieberventilbauart. Im Unterschied zur Sitzventilbauart wird bei der Schieberventilbauart ein langgestrecktes Gehäuse verwendet, dass mit einer Schieberbohrung versehen ist, in welcher ein Ventilschieber axial bewegbar geführt ist. Entlang der Schieberbohrung und/oder seitens des Ventilschiebers sind Abschnitte größeren und kleineren Durchmessers ausgebildet, welche ventilinterne Kammern bilden, über welche je nach Stellung des Ventilschiebers der Druckmittelfluss geleitet wird. Die einzelnen Kammern stehen über im Wesentlichen orthogonal zur Schieberbohrung ausgerichtete Anschlusskanäle mit den äußeren Anschlüssen des Ventilgehäuses in Verbindung. Bei der hier interessierenden Art von Schieberventilen sind die zwischen Ventilschieber und Ventilgehäuse erforderlichen dynamischen Dichtringe am Ventilschieber angebracht und gleiten dynamisch dichtend über Laufflächen und Steuerkanten seitens des Ventilgehäuses. Das Ventilgehäuse eines pneumatischen Schieberventils besteht gewöhnlich aus einem Kunststoff und ist durch Spritzgießen hergestellt.

Aus dem allgemeinen Stand der Technik gehen derartige Kunststoffgehäuse hervor, welche mittels einer Gießform durch Übermasse an Kunststoffwerkstoff spritztechnisch hergestellt werden. Diese Herstellungsform erfordert eine spanende Nachbearbeitung der Schieberbohrung, um maßgerechte Laufflächen sowie Steuerkanten zu erhalten. Dieser zusätzliche spanende Bearbeitungsschritt verursacht einen entsprechenden Herstellungsaufwand und durch unvermeidbare Restspäne innerhalb der Schieberbohrung ist die Herstellungsqualität nicht unter allen Umständen garantierbar.

Die DE 102 13 258 C1 offenbart eine technische Lösung, welche das vorstehend erläuterte Problem dadurch verhindert, dass das Kunststoffgehäuse mehrere axial zueinander beabstandete umspritzte Ventilbuchsen enthält zwischen denen mit den äußeren Anschlüssen in Verbindung stehende Druckmittelkammern angeordnet sind. Zwar erfordert diese Lösung das Einlegen der vorgefertigten Ventilbuchsen in die Gießform, ehe das Kunststoffgehäuse durch Spritzgießen erzeugt werden kann; jedoch wird eine spanende Nachbearbeitung eines so erzeugten Kunststoffgehäuses vollständig vermieden.

Aus der DE 197 29 828 A1 geht eine weitere Vorrichtung sowie ein Verfahren zur Herstellung eines Kunststoffgehäuses für ein Schieberventil hervor. Hierbei wird das Gehäuseinnere des einstückigen Kunststoffgehäuses zur Erzeugung der ventilinternen Kammern und Anschlusskanäle mit einem Schmelzkern versehen, welcher von mindestens einem herkömmlichen Werkzeugstempel in der Spritzgussform gehalten wird. Diese herkömmlichen Werkzeugstempel besitzen über die Länge einen gleich großen Querschnitt, so dass diese sich nach dem Spritzgießen, also dem Erhärten des Kunststoffes, wieder leicht aus dem fertigen Kunststoffgehäuse herausziehen lassen. Da das Gehäuseinnere jedoch auch Bereiche mit Hinterschneidungen aufweist, würde ein entsprechend geformter Stempel wegen der Hinterschneidungen ein anschließendes Herausziehen verhindern. Denn der erstarrte Kunststoff würde sich an die Form des entsprechend hinterschnittenen Werkzeugkerns anpassen. Stattdessen wird bei dieser technischen Lösung für hinterschnittene Gehäusebereiche der Schmelzkern verwendet, welcher nach Herausziehen der übrigen Werkzeugstempel durch Wärmeeinbringung aus dem Gehäuseinneren herausgeschmolzen werden kann. Zwar wird durch diese Technologie die Herstellung eines hinterschnittenen Kunststoffgehäuses durch Spritzgießen realisierbar, jedoch verursacht die Verwendung von sich verbrauchenden Schmelzkernen einen erhöhten Herstellungsaufwand.

Es ist die Aufgabe der vorliegenden Erfindung, eine Vorrichtung sowie ein Verfahren zur Herstellung eines Kunststoffgehäuses für ein pneumatisches Schieberventil aus Kunststoff durch Spritzgießen zu schaffen, welche/welches die Ausbildung der innenliegenden Schieberbohrung mit deren Schieberflächen und Steuerkanten durch wenige einfache spanlose Herstellungsschritte gestattet.

Die Aufgabe wird ausgehend von einer Vorrichtung gemäß dem Oberbegriff von Anspruch 1 in Verbindung mit dessen kennzeichnenden Merkmalen gelöst. Verfahrenstechnisch wird die Aufgabe durch Anspruch 7 gelöst. Die jeweils rückbezogenen abhängigen Ansprüche geben vorteilhafte Weiterbildungen der Erfindung wieder.

Die Erfindung schließt die technische Lehre ein, dass ein mehrere Hinterschnitte zur Ausbildung einer abgestuften Schieberbohrung aufweisender, da Werkzeugkern in der Gießform positioniert ist, welcher nach dem Einspritzen des flüssigen Kunststoffs und vor dem Abkühlen desselben aus der Gießform zwangsentformend herausziehbar ist, so dass sich nach elastischer Verformung des den Werkzeugkern umgebenden Bereichs des Kunststoffgehäuses eine nachbearbeitungsfreie abgestufte Schieberbohrung herausbildet.

Der Vorteil der erfindungsgemäßen Lösung liegt insbesondere darin, dass zusätzliche Nachbearbeitungsschritte des so hergestellten Kunststoffgehäuses gänzlich entfallen. Die erfindungsgemäße Lösung erfordert lediglich eine geeignete Abstimmung in der Materialwirkung des Kunststoffes, welcher einen ausreichenden elastischen Verformungsbereich während des Abkühlens besitzen muss in Kombination mit einem geeigneten Verhältnis zwischen den kleinen und großen Durchmessern, aus denen der Werkzeugkern besteht. Zu große Durchmesserdifferenzen würden die Zwangsentformung verhindern; zu kleine Durchmesserunterschiede würden dagegen nicht hinreichend große ventilinterne Kammern ausbilden. Die erfindungsgemäße Lösung beruht auf der Ausnutzung eines Materialeffekts, bei welchem sich der Werkstoff im elastischen Bereich dehnen lässt, um wieder in eine durch die Formgebung des Werkzeugkerns definierte Endlage zurückzugelangen. Mit dem Begriff "Zwangsentformung" ist das Herausziehen des Werkzeugkerns unter Aufbringung einer größeren, Materialwiderstände überwindenden Kraft gemeint.

Vorzugsweise ist der Werkzeugkern als ein einstückiges, mehrere Absätze aufweisendes Metalldrehteil ausgebildet. Hierdurch lässt sich der Werkzeugkern einfach herstellen. Dessen Oberfläche kann zusätzlich geschliffen und/oder poliert werden. Die mehreren Absätze sind vorzugsweise angefast und bilden die Bereiche kleineren und größeren Durchmessers der Schieberbohrung aus.

Zusätzlich können orthogonal von dem die Schieberbohrung ausbildenden Werkzeugkern mehrere Seitenschieber zum Einsatz kommen, welche ebenfalls mit entsprechend vor dem Spritzgießen in der Gießform positioniert sind. Diese Seitenschieber dienen der Erzeugung von Anschlusskanälen im Kunststoffgehäuse, die von der Schiebebohrung abgehen und an den äußeren Anschlüssen des Kunststoffgehäuses münden. Diese Seitenschieber können jeweils einen konstanten Querschnitt aufweisen.

Als im Zusammenhang mit der vorliegenden Erfindung besonders geeignetes Kunststoffmaterial wird Polyoxyinethylen (POM) empfohlen. Dieser Kunststoff besitzt die hier geforderten elastischen Verformungseigenschaften während des Abkühlens. Alternativ hierzu wäre auch Polyamid (PA 6) geeignet.

Weitere, die Erfindung verbessenden Maßnahmen werden nachstehend gemeinsam mit der Beschreibung eines bevorzugten Ausführungsbeispiels der Erfindung anhand der Figuren näher dargestellt. Es zeigt:
- Fig.1: ein teilweise Längsschnitt durch ein Kunststoffgehäuse eines Schieberventils, und
- Fig.2: ein teilweise Längsschnitt durch ein Schieberventil mit montiertem Ventilschieber.

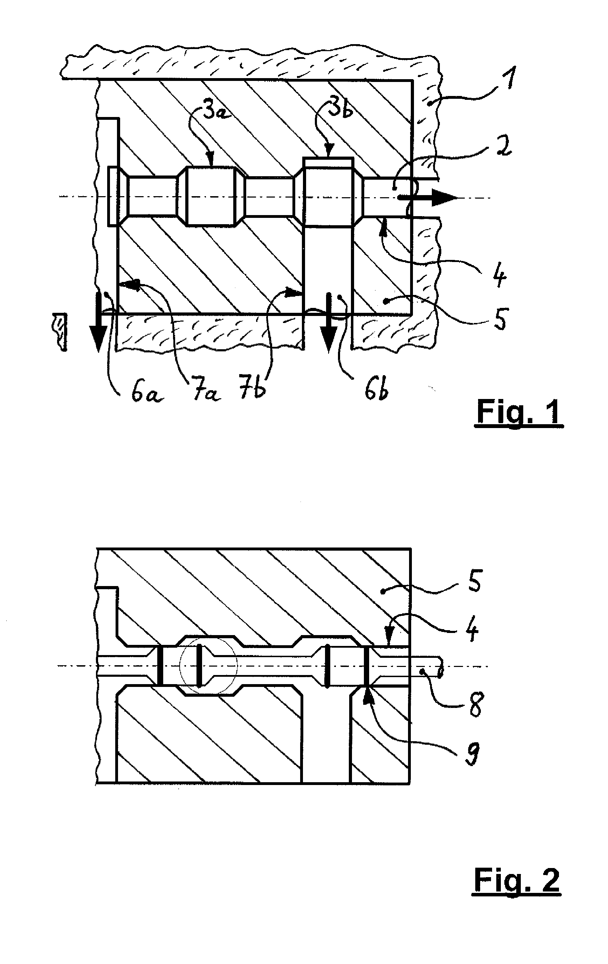

Gemäß Fig. 1 ist in einer - hier nur schematisch angedeuteten - Gießform 1 ein Werkzeugkern 2 positioniert. Der Werkzeugkern 2 ist einstückig ausgebildet und besitzt mehrere angefaste Absätze zur Bildung einer mehrere Hinterschnitt 3a und 3b aufweisenden Schieberbohrung 4. Nach dem Einspritzen von flüssigem Kunststoff bildet sich im Zuge des Abkühlens ein Kunststoffgehäuse 5. Nach dem Einspritzen des flüssigen Kunststoffs und vor dessen vollständigem Abkühlen durchläuft der Werkstoff einen Bereich hoher Elastizität. In dieser Phase wird der Werkzeugkern 2 zwangsentformend aus der Gießform 1 herausgezogen, um nach einer hierdurch bewirkten elastischen Verformung des den Werkzeugkern 2 umgebenden Bereichs des Kunststoffgehäuses 5 die abgestufte Schieberbohrung 4 zu schaffen, und zwar ohne, dass eine weitere spanende Nachbearbeitung erforderlich ist.

Orthogonal vom die Schieberbohrung 4 ausbildenden Werkzeugkern 2 sind Seitenschieber 6a und 6b innerhalb der Gießform 1 angeordnet. Die Seitenschieber 6a und 6b dienen der Erzeugung von zugeordneten Anschlusskanälen 7a und 7b im Kunststoffgehäuse 5. Die Seitenschieber 6a und 6b erfordern wegen gleichbleibender Querschnitte nicht einer Zwangsanformung.

Fig.2 zeigt das in vorstehender Weise hergestellte Kunststoffgehäuse 5 im montierten Zustand. Die Schieberbohrung 4 beherbergt den hierin axial verschieblichen Ventilschieber 8. Am Ventilschieber 8 sind mehrere Dichtringe 9 angeordnet, die eine dynamische Abdichtung gegenüber den Laufflächen und Steuerkanten der Schieberbohrung 4 gestatten. Ansonsten entspricht das Schieberventil der an sich bekannten Bauweise, so dass nicht weiter hierauf einzugehen ist.

### Bezugszeichenliste

- 1: Gießform
- 2: Werkzeugkern
- 3: Hinterschnitt
- 4: Schieberbohrung
- 5: Kunststoffgehäuse
- 6: Seitenschieber
- 7: Anschlusskanal
- 8: Ventilschieber
- 9: Dichtring

## Patentansprüche

1. Vorrichtung zur Herstellung eines Kunststoffgehäuses (5) für ein pneumatisches Schieberventil aus Kunststoff durch Spritzgießen, in einer mit mindestens einem Werkzeugkern (2) zur Bildung einer Schieberbohrung (4) ausgestatteten Gießform (1),
**dadurch gekennzeichnet, dass** ein mehrere Hinterschnitte (3a, 3b) zur Ausbildung einer abgestuften Schieberbohrung (4) aufweisender Werkzeugkern (2) in der Gießform (1) positioniert ist, welcher nach dem Einspritzen des flüssigen Kunststoffs und vor dem Abkühlen desselben aus der Gießform (1) zwangsentformend herausziehbar ist, so dass sich nach elastischer Verformung des den Werkzeugkern (2) umgebenden Bereichs des Kunststoffgehäuses (5) eine nachbearbeitungsfreie abgestufte Schieberbohrung (4) herausbildet.

2. Vorrichtung nach Anspruch 1,
**dadurch gekennzeichnet, dass** der Werkzeugkern (2) als ein einstückiges, mehrere Absätze aufweisendes Metalldrehteil ausgebildet ist.

3. Vorrichtung nach Anspruch 1 oder 2,
**dadurch gekennzeichnet, dass** orthogonal vom die Schieberbohrung (4) ausbildenden Werkzeugkern () angeordnete Seitenschieber (6a, 6b) zur Erzeugung von Anschlusskanälen (7a, 7b) im Kunststoffgehäuse (5) vorgesehen sind.

4. Vorrichtung nach Anspruch 3,
**dadurch gekennzeichnet, dass** die Seitenschieber (6a, 6b) jeweils einen konstanten Querschnitt aufweisen.

5. Vorrichtung nach Anspruch 1,
**dadurch gekennzeichnet, dass** der zum Spritzgießen verwendete Kunststoff aus Polyoxyinethylen (POM) besteht.

6. Vorrichtung nach Anspruch 1,
**dadurch gekennzeichnet, dass** die mit dem Werkzeugkern (2) erzeugte abgestufte Schieberbohrung (4) geeignet ist, um mit seitens eines Ventilschiebers (8) angeordneten Dichtringen (9) zusammenzuwirken.

7. Verfahren zur Herstellung eines Kunststoffgehäuses (5) für ein pneumatisches Schieberventil, welches aus Kunststoff durch Spritzgießen hergestellt wird, indem flüssiges Kunststoff in eine Gießform (1) mit mindestens einem Werkzeugkern (2) zur Bildung der Schieberbohrung (4) eingespritzt wird,
**gekennzeichnet durch** die folgenden Schritte:
- ein mehrere Hinterschnitte (3a, 3b) zur Ausbildung einer abgestuften Schieberbohrung (4) aufweisender Werkzeugkern (2) wird in der Gießform (1) positioniert,
- nach dem Einspritzen des flüssigen Kunststoffs und vor dem Abkühlen desselben wird der Werkzeugkern (2) zwangsentformend aus der Gießform (1) gezogen,
- so dass nach elastischer Verformung des den Werkzeugkern (2) umgebenden Bereich des Kunststoffgehäuses (5) eine nachbearbeitungsfreie abgestufte Schieberbohrung (4) erzeugt wird.

8. Verfahren nach Anspruch 7,
**dadurch gekennzeichnet, dass** der Kunststoff im Bereich von Laufflächen und/oder Steuerkanten der Schieberbohrung (4) durch den Werkzeugkern (2) während des Herausziehens aus der Gießform (1) im elastischen Bereich gedehnt wird.

9. Verfahren nach Anspruch 7,
**dadurch gekennzeichnet, dass** nach dem Herausziehen des die Schieberbohrung (4) ausbildenden Werkzeugkerns (2) orthogonal hiervon angeordnete Seitenschieber (6a, 6b) zur Ausbildung von Anschlusskanälen (7a, 7b) aus der Gießform (1) gezogen werden.

10. Verfahren nach Anspruch 7,
**dadurch gekennzeichnet, dass** die Seitenschieber (6a, 6b) nicht-zwangsentformend aus der Gießform (1) gezogen werden.
